# EUROPEAN PATENT APPLICATION

(11) **EP 3 217 466 A1**
(43) Date of publication of application: **13.09.2017**
(21) Application number: 15857335.2
(22) Date of filing: 28.10.2015
(51) Int. Cl.: H01M 10/6556, B60R 16/04, H01M 2/10, H01M 10/613, H01M 10/615, H01M 10/625, H01M 10/6563, H01M 10/6569, H01M 10/663

(54) **BATTERY TEMPERATURE CONTROL UNIT, AND BATTERY PACK USING SAME**

(30) Priority: 07.11.2014 JP 2014226927
(71) Applicant: Valeo Japan Co., Ltd., Saitama 360-0193 (JP)
(72) Inventor: HASHIMOTO, Koichi, Kumagaya-shi Saitama 360-0193 (JP); TAKAHASHI, Osamu, Kumagaya-shi Saitama 360-0193 (JP); HAYASHI, Naoto, Kumagaya-shi Saitama 360-0193 (JP)
(74) Representative: Metz, Gaëlle
(86) International application number: PCT/JP2015/080408
(87) International publication number: WO 2016/072328

(57) **Abstract**

To provide a battery temperature control unit minimizing the risk of leakage of a cooling medium in a case of a battery pack and a battery pack including the battery temperature control unit. A battery temperature control unit 1 disposed in an internal space 21 of a battery pack 2 includes a unit case 3 having a ventilation path 30 therein, an evaporator 11 disposed in the ventilation path 30, an inflow pipe 14 and an outflow pipe 15 extending from the evaporator 11, and an opening sealing part 33 (sealing member 4) sealing a battery pack opening 24 provided in a wall surface of the battery pack 2 and sealing a unit opening 34 of the unit case 3, in which an expansion device 16 is disposed outside the opening sealing part 33 (sealing member 4).

## Description

### Technical Field

The present invention relates to a battery temperature control unit used to control the temperature of batteries for electric vehicles and the like and to a battery pack including this battery temperature control unit.

### Background Art

Batteries for driving vehicles provided in electric vehicles or hybrid vehicles are controlled to a predetermined temperature by a temperature control device such as a heat exchanger to appropriately keep the charge and discharge performance.

In many cases, such a battery is mounted in a vehicle as a battery pack including the temperature control device and the like. For example, in a battery pack disclosed in PTL 1, a battery and a battery temperature control unit are disposed in an internal space, the battery temperature control unit includes a unit case having a ventilation path therein and a heat exchanger disposed in the ventilation path, and a cooling medium pipe bypassing an air conditioning expansion device and an air conditioning evaporator of the freezing cycle of an in-vehicle air conditioner is connected to the heat exchanger together with the expansion device.

In addition, PTL 1 discloses the structure in which an opening sealing part for sealing a battery pack opening (module opening) provided in the wall surface of a case (pack case) of the battery pack is provided separately from or integrally with the unit case to obtain the liquid tightness necessary for the battery pack and the air tightness of the unit case and simplify the assembly process, the opening sealing part is provided with a module sealing surface for blocking the battery pack opening from the internal space side and a pair of communication holes communicating the exterior of the pack case with the interior of the unit case, and the cooling medium pipe is connected to the pair of communication holes from the outside of the pack case and the expansion device disposed in the unit case is connected to the pair of communication holes from the inside of the unit case.

### Citation List

### Patent Literature

PTL 1: WO2013/080512

### Summary of Invention

### Technical Problem

However, since the expansion device is disposed in the unit case and the freezing pipe is connected via the opening sealing part in the battery temperature control unit disclosed in PTL 1, there are at least two connection portions between the pipe extending from the heat exchanger in the unit case and the expansion device and between the expansion device and the opening sealing part, so the risk of leakage of the cooling medium is caused in these two portions.

The invention addresses the above problem with a main object of providing a battery temperature control unit capable of minimizing the risk of leakage of a cooling medium in the case of a battery pack and a battery pack including the battery temperature control unit.

### Solution to Problem

To achieve the above object, there is provided a battery temperature control unit for controlling a temperature of a battery disposed in an internal space of a battery pack, the battery temperature control unit including a unit case provided in the internal space, the unit case having a ventilation path therein, an evaporator disposed in the ventilation path, an inflow pipe extending from the evaporator, a thermal medium flowing into the evaporator through the inflow pipe, an outflow pipe extending from the evaporator, the thermal medium flowing out from the evaporator through the outflow pipe, and an opening sealing part sealing a battery pack opening provided in a wall surface of the battery pack, the opening sealing part having a pair of communication holes communicating an exterior of the battery pack with an interior of the unit case, **characterized in that** the inflow pipe and the outflow pipe being fixed to the pair of communication holes.

That is, an expansion device is disposed outside the opening sealing part (outside the battery pack) regardless of whether the battery temperature control unit is modularized including the expansion device constituting part of a freezing cycle together with the evaporator or the battery temperature control unit is modularized separately from the expansion device.

Accordingly, if the battery temperature control unit has such a structure, the portions in the unit case of the battery temperature control unit in which the risk of leakage of the cooling medium is present can be limited to at least the positions at which the pipe extending from the heat exchanger is fixed to the opening sealing part (when the pipe extending from the heat exchanger passes through the opening sealing part and runs externally, the risk of leakage of the cooling medium in the unit case can be eliminated).

In the aspect in which the expansion device constituting part of a freezing cycle together with the evaporator is disposed outside the opening sealing part, the inflow pipe and the outflow pipe may be connected to the pair of communication holes of the opening sealing part from the inside of the unit case and the expansion device may be connected to the opening sealing part from the outside of the battery pack directly or via a pipe.

Alternatively, the inflow pipe and the outflow pipe may be connected to the expansion device by passing through the pair of communication holes of the opening sealing part.

In particular, in the structure of the latter case, the space between the pair of communication holes and the inflow pipe and the outflow pipe may be filled with a filling material to keep air tightness between the communication holes and the pipes.

In addition, a sealing surface sealing the battery pack opening of the opening sealing part may be larger than the expansion device.

In such a structure, when the battery pack opening is larger than the expansion device and is smaller than the sealing surface of a sealing member, the expansion device may be mounted by passing through the opening or the opening may be sealed by the sealing member.

The opening sealing part may be configured by a sealing member separated from the unit case and, in such a structure, the sealing member seals the battery pack opening provided in the wall surface of the battery pack and seals a unit opening provided in a wall surface of the unit case.

In addition, the opening sealing part may be formed integrally with the unit case. In such a structure, the air tightness between the opening sealing part and the unit case does not need to be controlled and the assembly of the battery temperature control unit becomes easier.

### Advantageous Effects of Invention

As described above, since the invention fixes the pipes extending from the evaporator disposed in the ventilation path of the unit case to the pair of communication holes of the opening sealing part sealing the battery pack opening provided in the wall surface of the battery pack, connection portions of the pipes in the case of the battery pack can be reduced or eliminated, thereby minimizing the risk of leakage of the cooling medium that may be caused in the case.

### Brief Description of Drawings

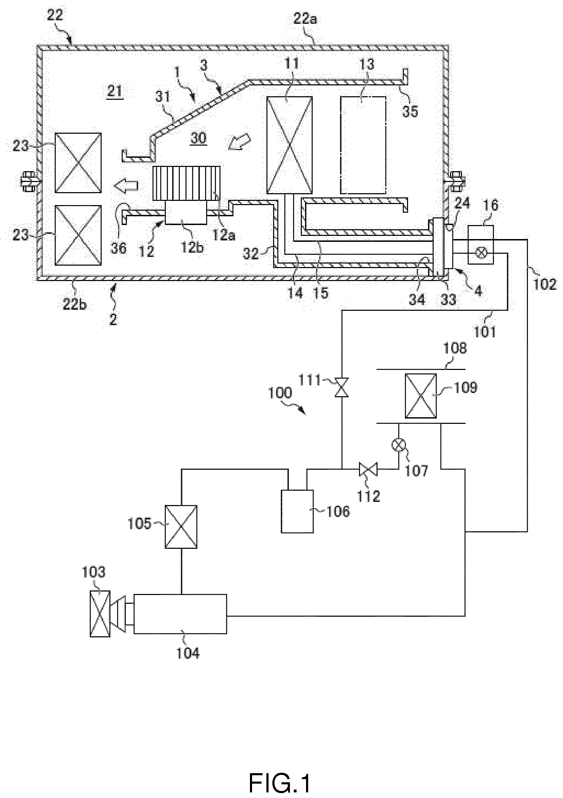

[Fig. 1] Fig. 1 is an overall structural diagram illustrating a battery pack.

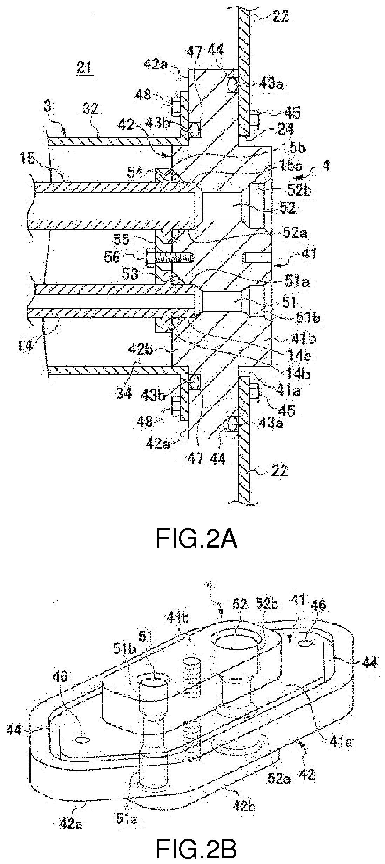

[Fig. 2] Fig. 2 (a) illustrates a state in which a battery temperature control unit including a unit case provided with a sealing member separated from the unit case is attached to a battery pack opening and a state in which an inflow pipe and an outflow pipe are connected to the sealing member and Fig. 2(b) is a perspective view illustrating the sealing member.

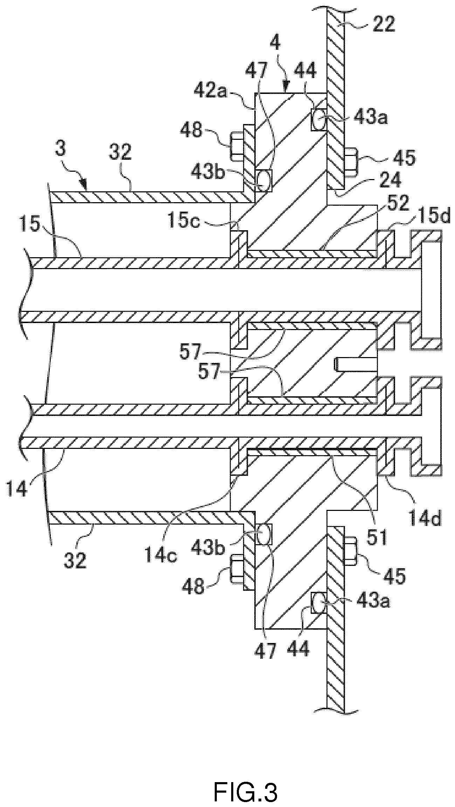

[Fig. 3] Fig. 3 illustrates a state in which the battery temperature control unit including the unit case provided with the sealing member is attached to the battery pack opening and a state in which the inflow pipe and the outflow pipe are fixed by passing through communication holes of the sealing member.

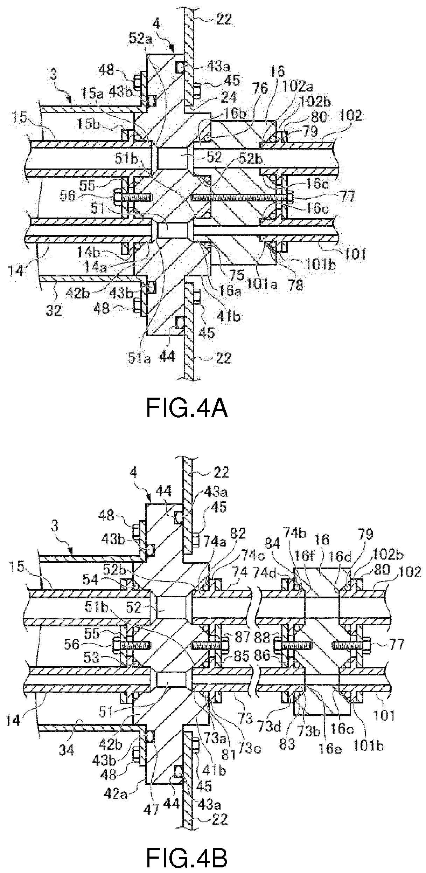

[Fig. 4] Fig. 4 illustrates the battery temperature control unit in which the inflow pipe and the outflow pipe are connected to the sealing member from the inside and an expansion device is provided outside the sealing member, Fig. 4 (a) illustrates an example of the structure in which the expansion device is directly connected to the sealing member, and Fig. 4 (b) illustrates an example of the structure in which the expansion device is connected to the sealing member via the pipes.

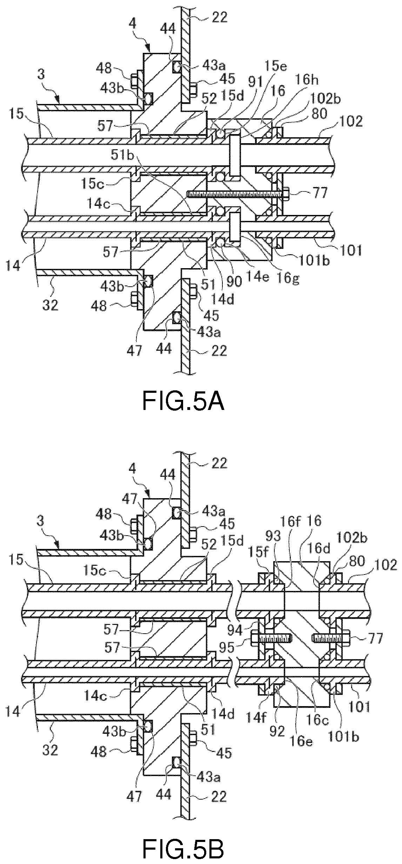

[Fig. 5] Fig. 5 illustrates an example of the structure in which the inflow pipe and the outflow pipe are directly connected to the expansion device by passing through the sealing member, Fig. 5(a) illustrates an example in which the expansion device is directly connected to the sealing member, and Fig. 5(b) illustrates an example in which the expansion device is connected to the sealing member via the pipes.

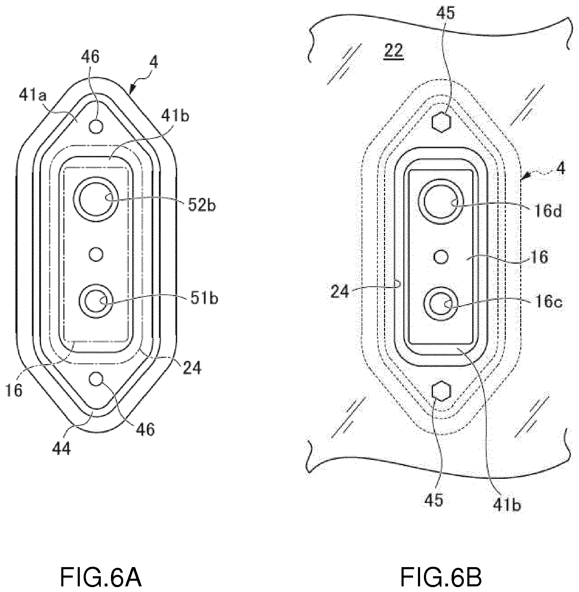

[Fig. 6] Fig. 6 is an explanatory diagram for explaining the sizes of the sealing member, the battery pack opening, and the expansion device, Fig. 6(a) is a front view illustrating the sealing member (the battery pack opening and the expansion device are indicated by dot-dash lines), Fig. 6 (b) illustrates a state in which the battery pack opening is sealed by the sealing member, as seen from the outside of the battery pack.

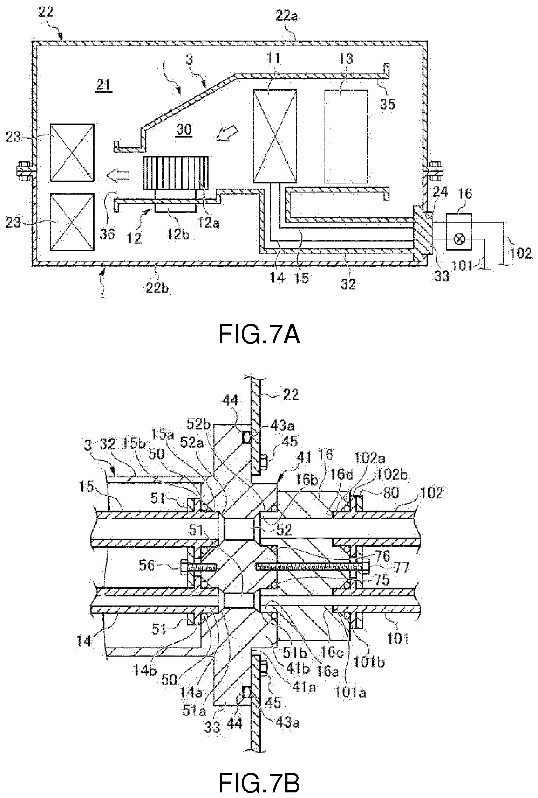

[Fig. 7] Fig. 7(a) illustrates the overall structure of the battery pack in which an opening sealing part is formed integrally with the unit case and Fig. 7 (b) illustrates a state in which the battery temperature control unit including the unit case provided integrally with the opening sealing part is attached to the battery pack opening.

### Description of Embodiments

A battery temperature control unit according to the invention will be described below with reference to the drawings.

As illustrated in Fig. 1, a battery temperature control unit 1 controls the temperature of an internal space 21 of a battery pack 2 for supplying electric power to a driving motor for an electric vehicle or a hybrid vehicle and the battery pack 2 includes a battery 23 and the battery temperature control unit 1 in a pack case 22.

The pack case 22 of the battery pack 2 is made of metal such as aluminum, iron, or stainless steel, formed into, for example, a rectangular parallelepiped hollow box, and includes a lid member 22a and a box member 22b. The battery 23, the battery temperature control unit 1, various types of electric wiring, and the like are mounted in the box member 22b and then disposed in the internal space 21 by closing the lid member 22a.

In addition, a battery pack opening 24 to be sealed by an opening sealing part 33, which will be described later, is formed in one of wall surfaces of the pack case 22. In this example, the battery pack opening 24 is formed in a side surface of the box member 22b.

The battery 23 is formed in a rectangular thin plate in this example and fixed in the pack case 22. The shape of this battery 23 is not particularly limited and may be cylindrical. In addition, since the battery 23 may generate heat when charged, degradation progresses if the temperature is not controlled, possibly reducing the storable amount of electric power early or causing deformation.

The battery temperature control unit 1 includes at least an evaporator (heat exchanger for cooling) 11 in a ventilation path 30 formed in a unit case 3 and has, as necessary, a blower unit 12 for blowing air into the ventilation path 30 or a heater core 13 (heat exchanger for heating). In this example, the evaporator 11 and the blower unit 12 are disposed in the unit case 3.

The unit case 3 is made of resin such as polypropylene, ABS, or acrylic, has a two-way division member for division into, for example, upper and lower parts, and includes a unit case body 31 having the ventilation path 30 therein, a pipe housing duct part 32 formed continuously from the unit case body 31 and surrounding the circumference of pipes (an inflow pipe 14 and an outflow pipe 15) extending from the evaporator 11, and a sealing member 4 constituting the opening sealing part 33 sealing the battery pack opening 24.

The unit case 3 includes a unit opening 34 provided at the end of the pipe housing duct part 32 facing the battery pack opening 24 provided in the pack case 22 of the battery pack 2, a suction port 35 provided in one of wall surfaces of the unit case 3, and a blowout port 36 provided in the other of the wall surfaces of the unit case 3.

The blower unit 12 is disposed downstream of the evaporator 11, includes an impeller 12a for blowing air sucked from the shaft direction radially outward and a driving motor 12b for rotating the impeller 12a, and blows air sucked from the suction port 35 through the blowout port 36.

The evaporator 11 has a radiation fin such as a corrugated fin and cools air by the evaporation of a cooling medium. The evaporator 11 is connected to a freezing cycle 100 via pipes such as the pipes (inflow pipe 14 and outflow pipe 15) extending from the evaporator 11 or cooling medium pipes (high pressure side cooling medium pipe 101 and low pressure side cooling medium pipe 102) bypassing part of the freezing cycle 100 of an in-vehicle air conditioner.

In the embodiment, the freezing cycle 100 includes a compressor 104 driven by connection to a travel engine or the like (not illustrated) via an electromagnetic clutch 103, a condenser 105 for condensing the cooling medium compressed by the compressor 104, a liquid tank 106 for separating a gaseous cooling medium from a liquid cooling medium in a mixture of the gaseous cooling medium and the liquid cooling medium condensed by the condenser 105, an air conditioning expansion device (such as, for example, a mechanical expansion valve or an orifice tube or an electric expansion valve for which the valve opening is changed by an external signal) 107 for reducing the pressure by expanding the liquid cooling medium, and an air conditioning evaporator 109 for cooling the air flowing through an air conditioning duct 108 by evaporating the cooling medium for which the pressure has been reduced by the air conditioning expansion device 107. The cooling medium pipes (high pressure side cooling medium pipe 101 and low pressure side cooling medium pipe 102) are connected to the air conditioning expansion device 107 and the air conditioning evaporator 109 in parallel.

The compressor 104 may be an electric compressor not having an electromagnetic clutch and the freezing cycle 100 may be a special cycle supplying the cooling medium only to the battery temperature control unit 1 without having a cooling medium path for air conditioning.

In addition, an expansion device 16 is provided outside the sealing member 4 (outside the pack case 22) upstream of the evaporator 11 of the high pressure side cooling medium pipe 101.

Although this expansion device 16 may be an orifice tube or an electric expansion valve for which the valve opening is changed by an external signal, the expansion device 16 is a block type mechanical expansion valve in this example. The block type mechanical expansion valve connects to the high pressure side cooling medium pipe 101 and the low pressure side cooling medium pipe 102, communicates the high pressure side cooling medium pipe 101 with the inflow pipe 14 directly or via the sealing member 4 or a relay pipe, which will be described later, communicates the low pressure side cooling medium pipe 102 with the outflow pipe 15 directly or via the sealing member or a relay pipe, which will be described later, detects the temperature of a thermal medium flowing through the outflow pipe 15, and performs the adiabatic expansion of the cooling medium supplied via the high pressure side cooling medium pipe 101 while automatically adjusting the opening of the path between the high pressure side cooling medium pipe 101 and the inflow pipe 14 depending on the temperature of the thermal medium.

In addition, a first switching valve 111 for opening or closing the high pressure side cooling medium pipe 101 is provided above the high pressure side cooling medium pipe 101. In addition, a second switching valve 112 for turning on or off a flow of the cooling medium to the air conditioning expansion device 107 is provided between the air conditioning expansion device 107 and the branch point of the high pressure side cooling medium pipe 101.

Accordingly, when cooling is performed by operating only the in-vehicle air conditioner, the compressor 104 is operated with the first switching valve 111 closed and the second switching valve 112 opened.

In addition, when the evaporator 11 is operated in parallel while performing cooling by operating the in-vehicle air conditioner, the compressor 104 is operated with the first switching valve 111 opened and the second switching valve 112 opened.

In addition, when only the evaporator 11 is operated although the cooling of the vehicle cabin by the in-vehicle air conditioner is not necessary, the compressor 104 is operated with the first switching valve 111 opened and the second switching valve 112 closed.

Since the cooling medium path can be arbitrarily opened or closed by replacing the expansion device 16 and the air conditioning expansion device 107 with electric expansion devices capable of opening and closing a cooling medium path, the switching valves 111 and 112 can be also omitted.

The openings (battery pack opening 24 and unit opening 34) of the pack case 22 and the unit case 3 are sealed by the sealing member 4 so as to ensure the air tightness.

The sealing member 4 is made of a metal such as aluminum, iron, or stainless steel and, as illustrated in Fig. 2, includes a pack case opening sealing part 41 blocking the battery pack opening 24 provided in the wall surface of the pack case 22 of the battery pack 2 and sealing the internal space 21 and a unit case opening sealing part 42 blocking the unit opening 34 provided at the end of the pipe housing duct part 32 of the unit case 3 and sealing the ventilation path 30.

The pack case opening sealing part 41 has an opening sealing surface 41a in contact with the inner circumferential edge of the battery pack opening 24, the part of the opening sealing surface 41a in contact with the circumferential edge of the battery pack opening 24 is provided with a groove 44 for housing a seal member (for example, 0-ring) 43a for preventing water from entering externally, and the pack case opening sealing part 41 is provided with screw holes 46 used by fixing bolts 45 for fixing to the pack case 22. In addition, the part of the pack case opening sealing part 41 facing the battery pack opening 24 is provided with a first convex portion 41b that passes through the battery pack opening 24 from the internal space 21 and projects to the outside of the pack case 22.

The unit case opening sealing part 42 has an opening sealing surface 42a in contact with the outer circumferential edge of the unit opening 34, the part of the opening sealing surface 42a in contact with the circumferential edge of the unit opening 34 is provided with a groove 47 for housing a seal member (for example, 0-ring) 43b for ensuring the air tightness with the unit case 3 (pipe housing duct part 32) and the unit case opening sealing part 42 is provided with screw holes (not illustrated) used for fixation to the unit case 3 (pipe housing duct part 32) by fixing bolts 48. In addition, the part of the unit case opening sealing part 42 facing the unit opening 34 is provided with a second convex portion 42b to be inserted into the pipe housing duct part 32 from the unit opening 34.

In addition, the sealing member 4 is provided with a pair of communication holes (inflow communication hole 51 and outflow communication hole 52), extending from the first convex portion 41b to the second convex portion 42b, that communicate the exterior of the battery pack 2 (pack case 22) with the interior of the unit case 3 and the inflow pipe 14, extending from the evaporator 11, through which the thermal medium flows into the evaporator and the outflow pipe 15, extending from the evaporator 11, through which the thermal medium flows from the evaporator 11 are fixed to the pair of communication holes 51 and 52.

In this example, an inflow pipe reception part 51a to be connected to a connection portion 14a of the inflow pipe 14 is formed in the end surface of the sealing member 4 close to the unit case (that is, the top surface of the second convex portion 42b) by enlarging the diameter of the inner side opening end of the inflow communication hole 51 and an outflow pipe reception part 52a to be connected to a connection portion 15a of the outflow pipe 15 is formed by enlarging the diameter of the inner side opening end of the outflow communication hole 52. In addition, the connection portions 14a and 15a of the inflow pipe 14 and the outflow pipe 15 are inserted into the corresponding pipe reception parts (inflow pipe reception part 51a and outflow pipe reception part 52a) together with sealing members 53 and 54 such as 0-rings attached to their peripheries, and brim parts 14b and 15b projecting radially from the peripheral surfaces close to the connection ends of the inflow pipe 14 and the outflow pipe 15 are brought into contact with the connection end surface of the sealing member 4. The back surfaces of the brim parts 14b and 15b are provided with a connection plate 55, the brim parts 14b and 15b are fixed to the second convex portion 42b of the sealing member 4 by a bolt 56, and the inflow pipe 14 and the outflow pipe 15 are connected to the second convex portion 42b of the sealing member 4 airtightly.

The end surface (that is, the top surface of the first convex portion 41b) of the sealing member 4 exposed from the battery pack opening 24 is provided with a high pressure side connection reception part 51b and a low pressure side connection reception part 52b used to connect the expansion device 16 directly or via a relay pipe by enlarging the diameters of the outer side opening end of the inflow communication hole 51 and the outer side opening end of the outflow communication hole 52.

Accordingly, in this example, the battery temperature control unit 1 is modularized by housing the evaporator 11, the blower unit 12, and the like in the unit case 3, fixing the sealing member 4 to the connection portions 14a and 15a of the inflow pipe 14 and the outflow pipe 15 extending from the evaporator, and fixing the sealing member 4 to the opening end (unit opening 34) of the pipe housing duct part 32 by the fixing bolts 48, and the modularized battery temperature control unit 1 is housed in and fixed to the pack case 22 housing the battery 23 so as to seal the battery pack opening 24 via the sealing member 4. By connection to the freezing cycle 100 outside the case via the expansion device 16, the battery pack 2 is provided with the temperature control function.

In the structure described above, the pipes (inflow pipe 14 and outflow pipe 15) extending from the evaporator 11 are connected to the sealing member 4 airtightly. Accordingly, since the connection portions of the cooling medium path in the battery temperature control unit 1 are only the connection portions between the pipes (inflow pipe 14 and outflow pipe 15) extending from the evaporator 11 and the sealing member 4, connection portions of the cooling medium path in the battery temperature control unit 1 can be reduced compared with the related art, thereby reducing the possibility of leakage of the cooling medium in the battery pack 2 (pack case 22).

In the structure described above, the connection portions 14a and 15a of the pipes (inflow pipe 14 and outflow pipe 15) extending from the evaporator 11 are fixed to the sealing member 4 by connecting these pipes to the sealing member 4 airtightly in constructing the battery temperature control unit 1 in which the expansion device 16 is not disposed in the pack case 22. However, as illustrated in Fig. 3, the inflow pipe 14 and the outflow pipe 15 may be fixed to the sealing member 4 airtightly by passing the inflow pipe 14 and the outflow pipe 15 through the sealing member 4, and making close contact with the inner surfaces or the opening peripheral edges of the communication holes (inflow communication hole 51 and outflow communication hole 52) by enlarging the pipes at both ends of the communication holes (inflow communication hole 51 and outflow communication hole 52) of the sealing member 4 using press work or the like to form brim parts 14c, 14d, 15c, and 15d. It is desirable to use, for example, the forming method disclosed in JP-A-10-220660 as the method for enlarging the pipes (inflow pipe 14 and outflow pipe 15).

The space between the sealing member 4 and the inflow pipe 14 and the space between the sealing member 4 and the outflow pipe 15 may be filled with a filling material 57 made from silicone, polyurethane, metamorphic silicone, or polysulfide to improve the air tightness.

Alternatively, the space between the sealing member 4 and the inflow pipe 14 and the space between the sealing member 4 and the outflow pipe 15 may be filled by brazing the sealing member 4 and the inflow pipe 14 to each other and brazing the sealing member 4 and the outflow pipe 15 to each other using a well-known brazing method.

Since portions to which the inflow pipe 14 and the outflow pipe 15 are connected are not present in the pipe housing duct part 32 (unit case 3) in such a structure, there is no possibility of leakage of the cooling medium in the pipe housing duct part 32 (unit case 3).

Although the expansion device 16 is disposed outside the sealing member 4 (outside the pack case 22) in the structure described above, the expansion device 16 may be disposed in various aspects as illustrated in Figs. 4 and 5.

In the structure illustrated in Fig. 2(a) in which the inflow pipe 14 and the outflow pipe 15 are connected to the sealing member 4, the expansion device 16 may be directly connected to the outside of the sealing member 4 as illustrated in Fig. 4(a) or the expansion device 16 may be connected to the outside of the sealing member 4 via relay pipes 73 and 74 as illustrated in Fig. 4(b).

That is, in the structure in which the expansion device 16 is directly connected to the sealing member 4, as illustrated in Fig. 4(a), a high pressure connection convex portion 16a, projecting from the expansion device 16, that has a high pressure side passing hole may be inserted, together with a sealing member 75 such as an O-ring or the like, into the high pressure side connection reception part 51b formed in the top surface of the first convex portion 41b of the sealing member 4, a low pressure connection convex portion 16b, projecting from the expansion device 16, that has a low pressure side passing hole may be inserted, together with a sealing member 76 such as an 0-ring or the like, into the low pressure side connection reception part 52b formed in the top surface of the first convex portion 41b, and the expansion device 16 may be fixed to the sealing member 4 by a fixing bolt 77 to keep this state.

In the structure described above, connection between the expansion device 16 and the cooling medium pipes 101 and 102 is made by providing a high pressure pipe reception part 16c to which the high pressure side cooling medium pipe 101 is connected and a low pressure pipe reception part 16d to which the low pressure side cooling medium pipe 102 is connected in the connection end surface (cooling medium pipe connection end surface) of the expansion device 16 with the cooling medium pipes 101 and 102, inserting connection ends 101a and 102a of the cooling medium pipes 101 and 102 into these pipe reception parts (high pressure pipe reception part 16c and low pressure pipe reception part 16d) together with sealing members 78 and 79 such as 0-rings attached to their peripheries, and bringing brim parts 101b and 102b projecting radially from the peripheral surfaces close to the connection ends of the cooling medium pipes 101 and 102 into contact with the cooling medium pipe connection end surface of the expansion device 16. The back surfaces of the brim parts 101b and 102b are provided with a connection plate 80, the brim parts 101b and 102b are fixed to the sealing member 4 together with the expansion device 16 by the fixing bolt 77, and the cooling medium pipes 101 and 102 are connected to the expansion device 16 airtightly.

In addition, in the structure in which the expansion device 16 is connected to the sealing member 4 via the relay pipes (high pressure relay pipe 73 and low pressure relay pipe 74), as illustrated in Fig. 4(b), the high pressure relay pipe 73 makes connection between the high pressure side connection reception part 51b provided in the top surface of the first convex portion 41b of the sealing member 4 and a high pressure relay pipe reception part 16e formed in the surface (relay pipe connection end surface) of the expansion device 16 facing the sealing member 4 and the low pressure relay pipe 74 makes connection between the low pressure side connection reception part 52b provided in the top surface of the first convex portion 41b of the sealing member 4 and a low pressure relay pipe reception part 16f provided in the surface of the expansion device 16 facing the sealing member 4.

In the structure of connection between the relay pipes 73 and 74 and the sealing member 4 and the structure of connection between the relay pipes 73 and 74 and the expansion device 16, connection portions 73a, 73b, 74a, and 74b of the relay pipes 73 and 74 are inserted, together with sealing members 81, 82, 83, and 84 such as 0-rings, into the pipe reception parts (high pressure side connection reception part 51b, low pressure side connection reception part 52b, high pressure relay pipe reception part 16e, and low pressure relay pipe reception part 16f) and brim parts 73c, 73d, 74c, and 74d projecting radially from the peripheral surfaces close to the connection portions of the relay pipes 73 and 74 are brought into contact with the top surface of the first convex portion 41b of the sealing member 4 and the relay pipe connection end surface of the expansion device 16. The back surfaces of the brim parts (73c, 74c, 73d, and 74d) are provided with connection plates 85 and 86, the brim parts are fixed to the sealing member 4 or the expansion device 16 by fixing bolt 87 and 88, and the relay pipes 73 and 74 are connected to the sealing member 4 and the expansion device 16 airtightly.

Also in such a structure, the structure of connection between the expansion device 16 and the cooling medium pipes 101 and 102 and other configurations are the same as the configurations illustrated in Fig. 4(a)

Next, when using the structure illustrated in Fig. 3 in which the inflow pipe 14 and the outflow pipe 15 penetrate through the sealing member 4 and are connected to the expansion device 16, connection may be made while the expansion device 16 is in contact with the outside of the sealing member 4 as illustrated in Fig. 5(a) or the expansion device 16 may be connected to the ends of the inflow pipe 14 and the outflow pipe 15 by penetrating the inflow pipe 14 and the outflow pipe 15 through the sealing member 4, extending these pipes by an appropriate length, and separating the expansion device 16 from the sealing member 4 as illustrated in Fig. 5(b).

That is, in the structure in which connection is made while the expansion device 16 is in contact with the sealing member 4, as illustrated in Fig. 5(a), the inflow pipe 14 and the outflow pipe 15 having penetrated through the sealing member 4 may be pressed to form the brim parts 14c, 14d, 15c, and 15d at both ends of the communication holes 51 and 52, sealing member mount grooves 14e and 15e may be formed at the ends of the pipes, the ends of the inflow pipe 14 and the outflow pipe 15 may be inserted into an inflow pipe reception part 16g and an outflow pipe reception part 16h formed in the end surface (outflow and inflow pipe connection end surfaces) of the expansion device 16 facing the sealing member 4 with sealing members 90 and 91 mounted in the sealing member mount grooves 14e and 15e, and the expansion device 16 may be fixed to the sealing member 4 by the fixing bolt 77 to keep this state.

In addition, in the structure in which the expansion device 16 is connected to the inflow pipe 14 and the outflow pipe 15 while the expansion device 16 is separated from the sealing member 4, as illustrated in Fig. 5(b), the inflow pipe 14 and the outflow pipe 15 having penetrated through the sealing member 4 are caused to project from the sealing member 4 by a desired length, the inflow pipe 14 and the outflow pipe 15 are pressed to form the brim parts 14c, 14d, 15c, and 15d at both ends of the communication holes 51 and 52 and form brim parts 14f and 15f at the ends of the pipes 14 and 15, the end of the inflow pipe 14 is inserted into the inflow pipe reception part 16e formed in the expansion device 16 together with a sealing member 92 such as an 0-ring disposed on its periphery, the end of the outflow pipe 15 is inserted into the outflow pipe reception part 16f formed in the expansion device 16 together with a sealing member 93 such as an 0-ring disposed on its periphery, and the brim parts 14f and 15f provided at the ends of the inflow pipe 14 and the outflow pipe 15 are brought into contact with the outflow and inflow pipe connection end surfaces of the expansion device 16. Since the back surfaces of the brim parts 14f and 15f are provided with a connection plate 94, the inflow pipe 14 and the outflow pipe 15 may be connected to the expansion device 16 airtightly by fixing the brim parts 14f and 15f to the expansion device 16 by a fixing bolt 95.

Since the structure of connection between the expansion device 16 and the cooling medium pipes 101 and 102 illustrated in the structures illustrated in in Figs. 5(a) and 5(b) and other configurations are the same as the configurations illustrated in Fig. 4, the components in the same positions are given the same reference numerals to omit descriptions.

Accordingly, in the structure in which the expansion device 16 is disposed outside the sealing member 4 (outside the battery pack 2), the battery temperature control unit 1 is modularized by housing the evaporator 11, the blower unit 12, and the like in the unit case 3, fixing the sealing member 4 to the connection portions of the inflow pipe 14 and the outflow pipe 15 extending from the evaporator 11, fixing the sealing member 4 to the opening end (unit opening 34) of the pipe housing duct part 32 via the fixing bolts 48, and connecting the expansion device 16 to the sealing member 4 directly or via the relay pipes 73 and 74. Then, the modularized battery temperature control unit 1 is housed and fixed in the pack case 22 housing the battery 23 so that the battery pack opening 24 is sealed by the sealing member 4. By connecting the freezing cycle 100 outside the case to the expansion device 16, the battery pack 2 is provided with the temperature control function.

Particularly, in such a structure, the sealing surface (opening sealing surface 41a) for sealing the battery pack opening 24 of the sealing member 4 is desirably larger than the expansion device 16 as illustrated in Fig. 6. Since the expansion device 16 is smaller than the groove 44 when the expansion device 16 is projected to the sealing member 4 in a direction orthogonal to the opening sealing surface 41a of the sealing member 4 in this example, when the battery temperature control unit 1 modularized including the expansion device 16 is mounted to the pack case 22, the battery pack opening 24 can be sealed from the inside by the sealing member 4 by passing the expansion device 16 through the battery pack opening 24 from the inside of the battery pack 2, thereby facilitating assembly.

Fig. 7 illustrates another example of the structure of the battery pack 2 according to the invention. Although the opening sealing part 33 provided in the unit case 3 is configured by the sealing member 4 separated from the unit case 3 in the above example of the structure, the opening sealing part 33 may be formed integrally with the unit case 3 (pipe housing duct part 32) and the internal space 21 may be sealed by blocking the battery pack opening 24 provided in the wall surface of the battery pack 2 (pack case 22) using the end of the pipe housing duct part 32 in the example of the structure illustrated in Fig. 7. Since the structure of the pack case opening sealing part 41 for sealing the battery pack opening 24 of the opening sealing part 33 is the same as that of the sealing member, the components in the same positions are given the same reference numerals to omit descriptions.

Accordingly, since the same working effect as in the above example of the structure can be obtained in such a structure and the opening sealing part 33 is formed integrally with the unit case 3 (pipe housing duct part 32), the above connection of the sealing member 4 and the pipe housing duct part 32 is not necessary, the air tightness between the opening sealing part 33 and the unit case 3 (pipe housing duct part 32) does not need to be controlled, and the assembly of the battery temperature control unit 1 becomes easier.

### Reference Signs List

- 1:: battery temperature control unit
- 2:: battery pack
- 3:: unit case
- 4:: sealing member
- 11:: evaporator
- 14:: inflow pipe
- 15:: outflow pipe
- 16:: expansion device
- 33:: opening sealing part
- 41a:: opening sealing surface
- 51:: inflow communication hole
- 52:: outflow communication hole
- 57:: filling material
- 73:: high pressure relay pipe
- 74:: low pressure relay pipe
- 100:: freezing cycle

## Claims

1. A battery temperature control unit (1) for controlling a temperature of a battery (23) disposed in an internal space (21) of a battery pack (2), the battery temperature control unit comprising:
a unit case (3) provided in the internal space (21), the unit case having a ventilation path (30) therein;
an evaporator (11) disposed in the ventilation path (30);
an inflow pipe (14) extending from the evaporator (11), a thermal medium flowing into the evaporator through the inflow pipe;
an outflow pipe (15) extending from the evaporator (11), the thermal medium flowing out from the evaporator through the outflow pipe; and
an opening sealing part (33) sealing a battery pack opening (24) provided in a wall surface of the battery pack (2), the opening sealing part having a pair of communication holes (51 and 52) communicating an exterior of the battery pack with an interior of the unit case (3),
**characterized in that** the inflow pipe (14) and the outflow pipe (15) being fixed to the pair of communication holes (51 and 52).

2. The battery temperature control unit (1) according to claim 1,
wherein an expansion device (16) constituting part of a freezing cycle (100) together with the evaporator (11) is disposed outside the opening sealing part (33).

3. The battery temperature control unit (1) according to claim 2,
wherein the inflow pipe (14) and the outflow pipe (15) are connected to the pair of communication holes (51 and 52) of the opening sealing part (33) from an inside of the unit case (3), and
wherein the expansion device (16) is connected to the opening sealing part (33) from an outside of the battery pack directly or via a pipe.

4. The battery temperature control unit (1) according to claim 2,
wherein the inflow pipe (14) and the outflow pipe (15) pass through the pair of communication holes (51 and 52) of the opening sealing part (33) and are connected to the expansion device (16).

5. The battery temperature control unit (1) according to claim 4,
wherein a space between the pair of communication holes (51 and 52) and the inflow pipe (14) and the outflow pipe (15) is filled with a filling material (57).

6. The battery temperature control unit (1) according to any one of claims 2 to 5,
wherein a sealing surface (41a) for sealing the battery pack opening (24) of the opening sealing part (33) is larger than the expansion device (16).

7. The battery temperature control unit (1) according to any one of claims 1 to 6,
wherein the opening sealing part (33) includes a sealing member (4) separated from the unit case (3), and
wherein the sealing member (4) seals the battery pack opening (24) provided in the wall surface of the battery pack and seals a unit opening (34) provided in a wall surface of the unit case.

8. The battery temperature control unit (1) according to any one of claims 1 to 6,
wherein the opening sealing part (33) is formed integrally with the unit case (3).

9. A battery pack (2) comprising the battery temperature control unit (1) according to any one of claims 1 to 8 disposed in the internal space (21).
